# EUROPÄISCHE PATENTSCHRIFT

(11) **EP 0 622 276 B1**
(45) Veröffentlichungstag und Bekanntmachung des Hinweises auf die Patenterteilung: **15.10.1997**
(21) Anmeldenummer: 94105784.6
(22) Anmeldetag: 14.04.1994
(51) Int. Cl.: B60R 21/20

(54) **Gassack-Rückhaltesystem für Fahrzeuge**
Airbag restraint system for vehicles
Système de retenue à coussin d'air pour véhicules

(30) Priorität: 26.04.1993 DE 4313616
(43) Veröffentlichungstag der Anmeldung: 02.11.1994
(73) Patentinhaber: TRW Occupant Restraint Systems GmbH, 73553 Alfdorf (DE)
(72) Erfinder: Lutz, Joachim, D-73579 Schechingen (DE)
(74) Vertreter: Degwert, Hartmut, Dipl.-Phys.

(56) Entgegenhaltungen:
- EP-A- 0 447 030
- EP-A- 0 485 602
- DE-A- 4 205 727
- GB-A- 2 257 400
- US-A- 5 096 222

## Beschreibung

Die Erfindung betrifft ein Gassack-Rückhaltesystem nach dem Oberbegriff des Anspruchs 1.

Ein gattungsgemäßes Gassack-Rückhaltesystem ist aus der GB 2 257 400 A bekannt und sie dient zum Einbau in ein Abdeckteil eines Fahrzeugsteuerrades. Das bekannte Rückhaltesystem ist in Modulbauweise aufgebaut, wobei der Gasgenerator und eine Tragplatte eine erste vormontierte Einheit und der gefaltete Gassack mit einer Verankerungsplatte eine zweite vormontierte Einheit bilden. Die Verankerungsplatte dient zum Befestigen des Gassacks und weist eine Durchgangsöffnung auf, durch die sich der Gasgenerator hindurch in das Innere des Gassacks erstreckt. Die erste Einheit aus dem Gasgenerator und der Tragplatte sind durch eine Schraubverbindung miteinander fixiert, die sich aber im Fahrbetrieb sehr leicht lockern kann. Der Zusammenbau der ersten Einheit ist aufgrund des Vorsehens der Schraubverbindung zudem aufwendig.

Aus der WO 90/03901 ist ein Gassack-Rückhaltesystem bekannt, das eine Tragplatte mit einer Aussparung aufweist, in die ein Gasgenerator eingefügt ist. Der Gasgenerator ist zur Befestigung an der Tragplatte mit angeformten Wandungsteilen versehen, die an der Tragplatte befestigt werden. Weiterhin ist im Gassack ein Befestigungsring angeordnet, der Hohlstifte aufweist, die in zugeordnete Durchgangsöffnungen des Gassacks und der Tragplatte eingreifen. In diese Hohlstifte sind Nieten gesteckt, die mit den Hohlstiften zusammengepreßt werden. Der Gassack wird durch den Befestigungsring auf die Tragplatte gepreßt. Eine Abdeckung umgreift die Tragplatte und ist auf diese Weise auch auf der Tragplatte fixiert.

Der Erfindung liegt die Aufgabe zugrunde, ein Gassack-Rückhaltesystem der eingangs angegebenen Art derart weiterzubilden, daß die Herstellung und Montage des Gassack-Rückhaltesystems vereinfacht wird.

Diese Aufgabe wird durch ein Gassack-Rückhaltesystem mit den Merkmalen des Anspruchs 1 gelöst.

Beim erfindungsgemäßen Gassack-Rückhaltesystem wird die erste Einheit dadurch gebildet, daß der Gasgenerator in eine Vertiefung in der Tragplatte eingesetzt und durch radial einwärts verstemmte Wandungsteile der Tragplatte an ihr befestigt wird. Diese Art der Montage kann auf einfache Weise vollständig automatisiert erfolgen. Ferner wird durch das Verstemmen ausgeschlossen, daß sich die Verbindung zwischen der Tragplatte und dem Gasgenerator während des Fahrbetriebs löst und Klappergeräusche auftreten.

Gemäß einer vorteilhaften Weiterbildung ist die Abdeckung mit einwärts umgebogenen Wandungsteilen versehen, die zwischen der Verankerungsplatte und der Tragplatte eingespannt sind. Die Befestigungsbolzen werden in die Wandungsteile von innen gesteckt und anschließend mit der Tragplatte durch die Schraubmuttern zusammengespannt. Dadurch ist die Abdeckung einfach und sicher anzubringen, und es ergibt sich nur eine Montagerichtung für den kompletten Zusammenbau des Gassack-Rückhaltesystems.

Um den Gassack in seinem gefalteten Zustand zu halten, und seine vorbestimmte Faltung während des Montierens nicht zu beeinträchtigen, ist er mit einer Folie umgeben. Dies kann mit Hilfe einer Schrumpffolie oder durch eine Folienbanderole realisiert werden, wobei die Folie beim Aufblasvorgang zerrissen wird, oder nach dem Einlegen in die Abdeckung entfernt werden kann.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
- Fig. 1: eine perspektivische Explosionsansicht eines Gassack-Rückhaltesystems gemäß der vorliegenden Erfindung;
- Fig. 2: eine Verankerungsplatte von Fig. 1;
- Fig. 3: eine Untersicht des Gassack-Rückhaltesystems von Fig. 1;
- Fig. 4: eine Teilschnittansicht gemäß der Linie A-A von Fig. 3;
- Fig. 5: eine vergrößerte Detailansicht gemäß der Linie X von Fig. 4;
- Fig. 6: eine Teilschnittansicht gemäß der Linie B-B von Fig. 3;
- Fig. 7: eine schematische Schnittansicht durch den Scharnierbereich eines Wandungsteils der Abdeckung von Fig. 1;
- Fig. 8: eine schematische Schnittansicht durch den Scharnierbereich eines Wandungsteils der Abdeckung gemäß einer weiteren Ausführungsform;
- Fig. 9: eine Schnittansicht eines Wandungsteils der Abdeckung mit Durchgangsöffnung von Fig. 1;
- Fig. 10: eine perspektivische Teilschnittansicht der Abdeckung im nicht montierten Zustand von Fig. 1; und
- Fig. 11 bis 13: Teilschnittansichten durch die Abdeckung in unterschiedlichen Montagezuständen.

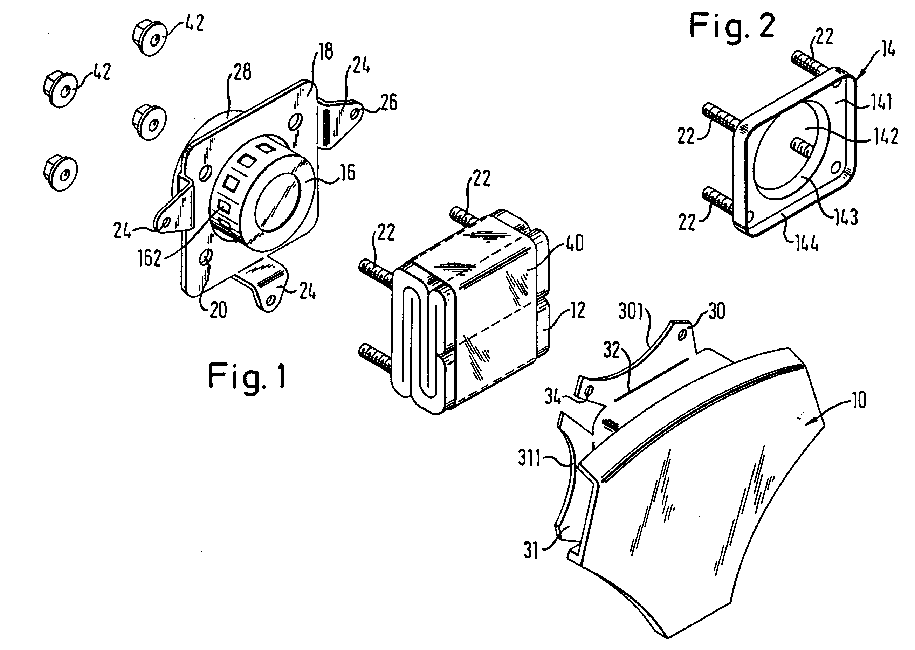

In Fig. 1 ist in einer perspektivischen Explosionsdarstellung ein Gassack-Rückhaltesystem gemäß der Erfindung dargestellt. Es besteht im wesentlichen aus einer Abdeckung 10, einem Gassack 12, eine Verankerungsplatte 14, die aus Metall besteht, einem Gasgenerator 16, und einer Tragplatte 18, die ebenfalls aus Metall besteht. Der Gassack 12 ist aus beschichteten oder unbeschichteten Gewebeteilen hergestellt, die miteinander vernäht sind.

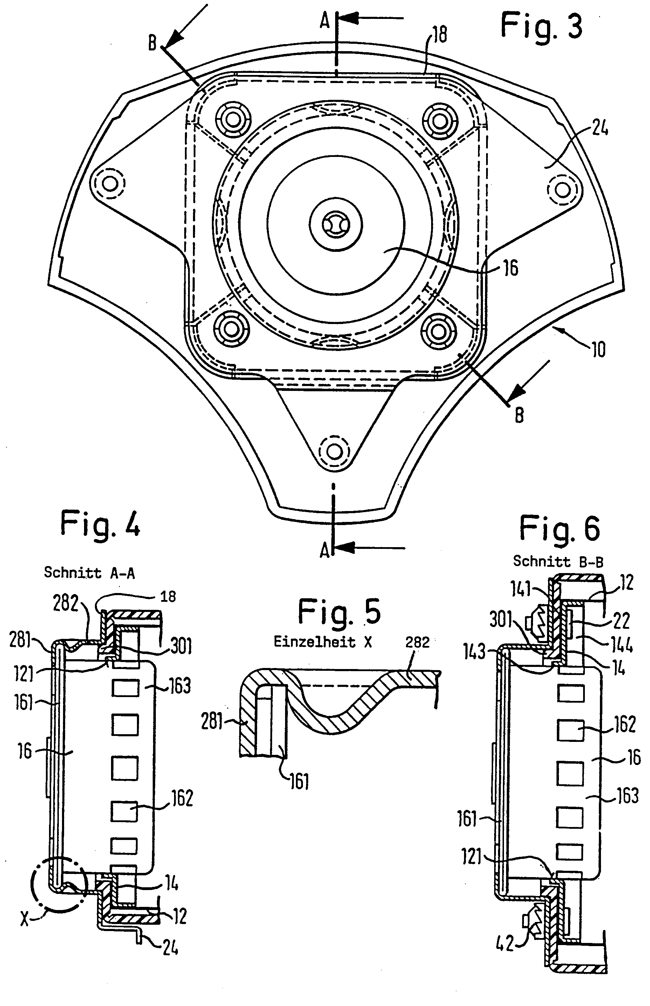

Die Tragplatte 18 ist im wesentlichen quadratisch ausgebildet und weist vier Durchgangsbohrungen 20 auf. Die Durchgangsbohrungen 20 sind Befestigungsbolzen 22 der Verankerungsplatte 14 zugeordnet. Weiterhin sind an der Tragplatte 18 drei Befestigungslaschen 24 mit Bohrungen 26 angeformt. Die Tragplatte 18 wird über diese Befestigungslaschen 24 an dem Fahrzeug befestigt, indem Schrauben durch die Bohrungen 26 gesteckt und diese mit dem Fahrzeug verschraubt werden. Die Tragplatte 18 weist eine zylindrische Vertiefung 28 auf, in die der zylindrisch ausgebildete Gasgenerator 16 eingefügt ist. Der Durchmesser der Vertiefung 28 entspricht im wesentlichen dem Durchmesser einer verbreiterten Stirnseite 161 des Gasgenerators (Fig. 4 bis 6). Diese verbreiterte Stirnseite 161 des Gasgenerators 16 liegt auf dem Boden 281 der Vertiefung 28 auf. Der Mantel 282 der Vertiefung 28 ist bereichsweise nach innen gebogen ausgebildet (Fig. 3 bis 5). Der Durchmesser der Vertiefung 28 wird dadurch verkleinert und umgreift die verbreiterte Stirnwandung 161 des Gasgenerators 16, wobei dieser in der Vertiefung 28 durch Verstemmen fixiert ist.

Der Gasgenerator 16 ist mit mehreren Gasauslaßöffnungen 162 versehen. Die Gasauslaßöffnungen 162 sind außerhalb der Vertiefung 28 in dem durch die Einblasöffnung 121 des Gassacks 12 ragenden Teil des Mantels 163 des Gasgenerators 16 angeordnet. Auf diese Weise kann das aus dem Gasgenerator 16 austretende Gas unmittelbar in den Gassack 12 einströmen.

Die Verankerungsplatte 14 ist in die Einblasöffnung 121 des Gassacks 12 eingebracht, und die Befestigungsbolzen 22 der Verankerungsplatte 14 sind in den Befestigungsbolzen 22 zugeordnete Durchgangsöffnungen des Gassacks 12 eingeführt. Die Verankerungsplatte 14 besteht aus einem scheibenförmigen Wandungsteil 141, das eine kreisförmige Aussparung 142 aufweist, die im wesentlichen der Einblasöffnung 121 des Gassacks 12 entspricht. Diese Aussparung 142 wird von einem zur Außenseite des Gassacks 12 umgebogenen Rand 143, der sich senkrecht zu dem Wandungsteil 141 erstreckt und zylindrisch ausgebildet ist, begrenzt (Fig. 2). Die Verankerungsplatte 14 ist an ihrem äußeren Rand 144 senkrecht und entgegengesetzt zum inneren Rand 143 umgebogen. Der innere Rand 143 liegt im montierten Zustand an dem Gasgenerator 16 an und erstreckt sich in die Vertiefung 28 der Tragplatte 18 (Fig. 4, Fig. 6).

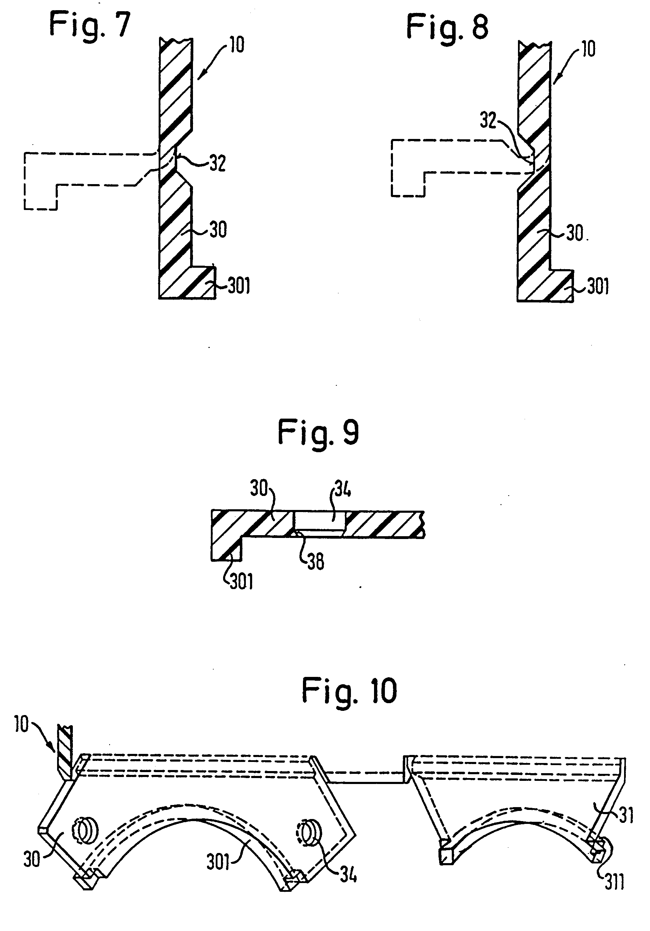

Die Abdeckung 10 weist vier klappbar ausgebildete Wandungsteile 30, 31 auf, die über ein durch eine Nut gebildetes Scharnier 32 mit der Abdeckung 10 verbunden sind. Zwei einander gegenüberliegende Wandungsteile 30 sind mit Durchgangsöffnungen 34 versehen, die den Befestigungsbolzen 22 zugeordnet sind. Im eingeklappten Zustand der Wandungsteile 30, 31 weist die Abdeckung 10 eine kreisförmige Öffnung auf, deren Durchmesser im wesentlichen dem Durchmesser des Mantels 163 des Gasgenerators 16 entspricht. Wie am deutlichsten der Fig. 10 zu entnehmen ist, weisen die Wandungsteile 30, 31 eine in die Vertiefung 28 eingreifende Randleiste 301, 311 auf. Die Randleiste 311 jeweils eines der umgebogenen Wandungsteile 31 ist in Umfangsrichtung des Gasgenerators 12 verlängert und greift passend in eine Aussparung eines benachbarten Wandungsteils 30 ein. Auf diese Weise sind die Wandungsteile 30, 31 im eingeklappten Zustand stabil angeordnet und stellen einen optimalen Kraftfluß zwischen den einzelnen Teilen her (Fig. 4 und Fig. 6).

Die Abdeckung 10 bildet die Prallplatte im Lenkrad eines Fahrzeugs. Sie besteht aus einem Werkstoff mit unterschiedlichen Härtestufungen ohne zusätzlicher Einlegeteile und ist im Spritzgußverfahren hergestellt.

In den Fig. 7 bis 9 ist jeweils ein Wandungsteil 30 der angeformten Randleiste 301 dargestellt. Die Fig. 7 und 8 zeigen jeweils eine unterschiedliche Ausbildung des die Abdeckung 10 mit dem Wandungsteil 30 verbindenden Scharniers 32. Gemäß Fig. 7 ist das Scharnier 32 durch eine innere Nut in der Wandung der Abdeckung 10 gebildet, wohingegen gemäß Fig. 8 das Scharnier 32 durch eine äußere Nut in der Wandung der Abdeckung 10 gebildet ist. Die Aussparung 34 des Wandungsteils 30 ist dabei so verengt, daß der in die Aussparung 34 eingeführte Befestigungsbolzen 22 durch die Verengung 38 gegen eine Bewegung in Axialrichtung geklemmt ist (Fig. 9). Die Verengung 38 bildet eine angespritzte 45° Fase, die sich in den Gewindegängen des Befestigungsbolzens 22 verankert. Dadurch wird auch ein Auffedern der umgebogenen Wandungsteile 30 verhindert.

Bei der Herstellung des Gassack-Rückhaltesystems gemäß der Erfindung werden der Gasgenerator 16 und die Tragplatte 18 als erste Baugruppe vormontiert. Ferner werden die Verankerungsplatte 14 und der Gassack 12 unabhängig von der ersten Baugruppe als zweite Baugruppe vormontiert.

Zur Herstellung der ersten Baugruppe wird in die vorgefertigte Tragplatte 18 der Gasgenerator 16 eingebracht und anschließend durch Verstemmen des Mantels 282 der Vertiefung 28 so befestigt, daß der Mantel 282 die Stirnwandung 161 des Gasgenerators 16 umgreift.

Zur Herstellung der zweiten Baugruppe wird in den ungefalteten Gassack 12 die Verankerungsplatte 14 durch die Einblasöffnung 121 eingebracht, und die Befestigungsbolzen 22 werden von innen durch die Durchgangsöffnungen im Gassack 12 gesteckt, bis die Verankerungsplatte 14 auf dem Gassack 12 aufliegt. Anschließend wird der Gassack 12 gefaltet und in eine zerreißbare Kunststoffolie 40 eingeschweißt. Dadurch wird der Gassack 12 in seinem gefalteten Zustand gehalten und kann in diesem Zustand zwischengelagert werden.

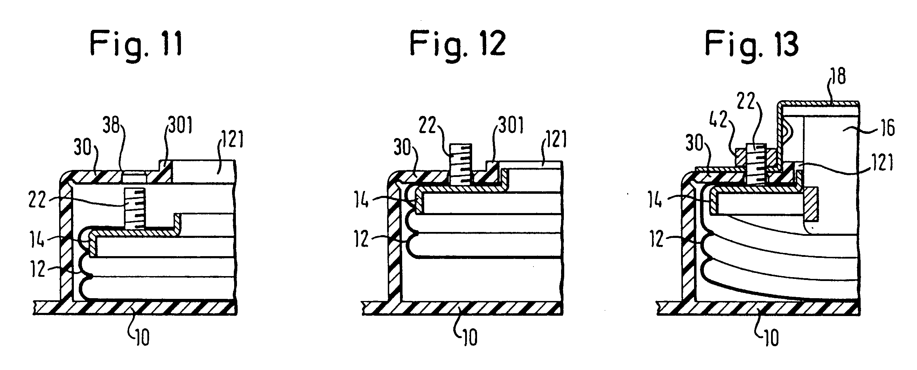

Für die Montage der beiden Baugruppen wird die Einheit aus gefaltetem Gassack 12 und in den Gassack 12 eingebrachter Verankerungsplatte 14 nunmehr in die Abdeckung 10 eingelegt. Anschließend werden die Wandungsteile 30, 31 nach innen geklappt. Die Einbautiefe der geschlossenen Abdeckung 10 muß größer gleich der Gesamthöhe des Gassacks 12 mit der Verankerungsplatte 14 und ihren Befestigungsbolzen 22 sein, um eine Montage zu ermöglichen, siehe Fig. 11-13. Somit gelangen die Befestigungsbolzen 22 so unterhalb die Wandungsteile 30, 31, daß sie nunmehr von innen in die Durchgangsöffnungen 34 im Wandungsteil 30 eingeführt werden können (Fig. 11 bis Fig. 13). Da die Befestigungsbolzen 22 danach durch die Verengung 38 geklemmt sind, kann die Einheit aus Abdeckung 10, Gassack 12 und Verankerungsplatte 14 an der Tragplatte 18 mit dem Gasgenerator 16 befestigt werden, ohne daß sich die Befestigungsbolzen 22 der Verankerungsplatte 14 wieder aus den Durchgangsöffnungen 34 herausbewegen. Die Befestigungsbolzen 22 werden durch die Durchgangsöffnungen 20 in der Tragplatte 18 gesteckt. Anschließend werden die Schraubenmuttern 42 aufgeschraubt.

Durch die erfindungsgemäße Ausbildung eines Gassack-Rückhaltesystems ist eine einfache Montage und Fertigung möglich. Der Gasgenerator 16 kann auf die Tragplatte 18 in der oben erwähnten Weise durch Verstemmen vormontiert werden, wie die Verankerungsplatte 14 und der Gassack 12 mit der Abdeckung 10 unabhängig davon zusammengebaut werden können. Somit ist auch eine Zwischenlagerung der eben genannten Baugruppen möglich. Vorteilhaft für die Montage ist auch, daß sich durch die erfindungsgemäße Ausbildung nur eine Montagerichtung - in Axialrichtung des Gasgenerators 12 - ergibt. Ein weiterer Vorteil der erfindungsgemäßen Ausführung ergibt sich durch die durch die einfache Demontage und Trennung der Baugruppen ermöglichte Recyclebarkeit der Bauteile, insbesondere im Hinblick auf das zur Entsorgung erforderliche Trennen des Gasgenerators 12 von den übrigen Bauteilen.

## Patentansprüche

1. Gassack-Rückhaltesystem zum Einbau in ein Abdeckteil (10) eines Fahrzeugsteuerrades, mit dem Abdeckteil (10), einer Tragplatte (18) zur Befestigung im Abdeckteil (10) und einem auf der Tragplatte (18) befestigten Gasgenerator (16) mit Gehäuse, welcher zusammen mit der Tragplatte (18) eine vormontierte, erste Einheit bildet, einem gefalteten Gassack (12) mit einer Einblasöffnung (121) und einer Verankerungsplatte (14) für den Gassack (12), die mit Befestigungsbolzen (22) versehen ist, wobei die Verankerungsplatte (14) eine Öffnung (142) hat, die zur Einblasöffnung (121) ausgerichtet ist, wobei der Gasgenerator (16) ein Gehäuseteil hat, das sich durch die Öffnung (142) in der Verankerungsplatte (14) und durch die Einblasöffnung (121) hindurch in den gefalteten Gassack (12) erstreckt, wobei die Befestigungsbolzen (22) in montiertem Zustand des Gassack-Rückhaltesystems in Durchgangsöffnungen (20) in der Tragplatte (18) eingreifen und die Verankerungsplatte (14) mit der Tragplatte (18) durch auf die Befestigungsbolzen (22) aufschraubbare Schraubmuttern (42) zusammenspannbar ist, und wobei der gefaltete Gassack (12) und die Verankerungsplatte (14) eine zweite vormontierte Einheit bilden, **dadurch gekennzeichnet**, daß die erste Einheit dadurch gebildet wird, daß der Gasgenerator (12) durch radial einwärts verstemmte Wandungsteile (282) der Tragplatte (18) in einer Vertiefung (28) in der Tragplatte (18), in die er eingesetzt ist, befestigt ist.

2. Gassack-Rückhaltesystem nach Anspruch 1, **dadurch gekennzeichnet**, daß die Abdeckung (10) mit einwärts umgebogenen Wandungsteilen (30, 31) versehen ist, die zwischen der Verankerungsplatte (14) und der Tragplatte (18) eingespannt sind.

3. Gassack-Rückhaltesystem nach Anspruch 2, **dadurch gekennzeichnet**, daß die umgebogenen Wandungsteile (30) mit Durchgangsöffnungen (34) für die Befestigungsbolzen (22) versehen ist.

4. Gassack-Rückhaltesystem nach einem der vorstehenden Ansprüche, **dadurch gekennzeichnet**, daß die allgemein quadratisch ausgebildete Tragplatte (18) mit angeformten Befestigungslaschen (24) versehen ist.

5. Gassack-Rückhaltesystem nach einem der vorstehenden Ansprüche, **dadurch gekennzeichnet**, daß der Gassack (12) durch eine ihn umgebende Folie (40) im gefalteten Zustand zusammengehalten wird.

6. Gassack-Rückhaltesystem nach Anspruch 2 oder Anspruch 2 und einem der Ansprüche 3 bis 5, **dadurch gekennzeichnet**, daß die umgebogenen Wandungsteile (30, 31) der Abdeckung (10) mit einer in die Vertiefung (28) der Tragplatte (18) eingreifenden Randleiste (301, 311) versehen sind.

7. Gassack-Rückhaltesystem nach Anspruch 6, **dadurch gekennzeichnet**, daß die Randleiste (311) jeweils eines der umgebogenen Wandungsteile (31) in Umfangsrichtung des Gasgenerators (12) verlängert ist und passend in eine Aussparung eines benachbarten Wandungsteils (30) der Abdeckung (10) eingreift.

8. Gassack-Rückhaltesystem nach einem der vorstehenden Ansprüche, **dadurch gekennzeichnet**, daß die Abdeckung (10) die Prallplatte eines Lenkrades bildet.

9. Gassack-Rückhaltesystem nach Anspruch 3 oder Anspruch 3 und einem der Ansprüche 4 bis 8, **dadurch gekennzeichnet**, daß die Durchgangsöffnungen (34) der Wandungsteile (30) jeweils eine den Befestigungsbolzen (22) klemmende Verengung (38) aufweisen.

## Claims

1. A gas bag restraining system adapted to be mounted in a cover part (10) of a vehicle steering wheel, comprising said cover part (10), a supporting plate (18) adapted to be mounted in the cover part (10), and a gas generator (16) comprising a housing and being secured on said supporting plate (18), said gas generator together with said supporting plate (18) forming a preassembled first unit, further comprising a folded gas bag (12) having an inflation opening (121) and an anchoring plate (14) for the gas bag (12), said anchoring plate being provided with fastener bolts (22) and having an opening (142) directed toward said inflation opening (121), said gas generator (16) having a housing part extending through said opening (142) in said anchoring plate (14) and through said inflation opening (121) into said folded gas bag (12), said fastener bolts (22), in a mounted state of said gas bag restraining system, engaging into through-openings (20) in said supporting plate (18) and said anchoring plate (14) being clampable to said supporting plate (18) by means of nuts (42) which can be screwed onto said fastening bolts (22), said folded gas bag (12) and said anchoring plate (14) forming a second preassembled unit, characterized in that said first unit is formed by securing said gas generator in a recess (28) of said supporting plate (18) into which it is inserted, by means of wall parts (282) of said supporting plate (18) which are caulked radially inwards.

2. A gas bag restraining system as set forth in claim 1, characterized in that said cover (10) is provided with wall parts (30, 31) which are bent inwards and clamped between said anchoring plate (14) and said supporting plate (18).

3. A gas bag restraining system as set forth in claim 2, characterized in that saind bent wall parts (30, 31) are provided with through-openings (34) for said fastener bolts (22).

4. A gas bag restraining system as set forth in any of the above claims, characterized in that said generally square supporting plate (18) is provided with formed fastener tabs (24).

5. A gas bag restraining system as set forth in any of the above claims, characterized in that said gas bag (12) is held together in folded condition by a wrapping film (40).

6. A gas bag restraining system as set forth in claim 2 and in claim 2 and any of the claims 3 thru 5, characterized in that said bent wall parts (30, 31) of said cover (10) are provided with an edge strip (301, 311) engaging said recess (28) of said supporting plate (18).

7. A gas bag restraining system as set forth in claim 6, characterized in that said edge strip (311) of each bent wall part (31) is elongated in the circumferential direction of said gas generator (12) and suitably engages a recess of a neighboring wall part (30) of said cover (10).

8. A gas bag restraining system as set forth in any of the above claims, characterized in that said cover (10) forms the impact plate of a steering wheel.

9. A gas bag restraining system as set forth in claim 3 or in claim 3 and any of the claims 4 thru 8, characterized in that said through-openings (34) of said wall parts (30) each feature a restriction (38) clamping said fastener bolts (22).

## Revendications

1. Système de retenue à coussin gonflable, à monter dans un cache (10) d'un volant de véhicule, comprenant le cache (10) une plaque porteuse (18), servant à la fixation dans le cache (10), et un générateur de gaz (16),fixé sur la plaque porteuse (18), avec un boîtier, générateur de gaz qui forme en même temps que la plaque porteuse (18) une première unité préassemblée, comprenant en outre un coussin gonflable replié (12) avec un orifice de gonflage (121) et une plaque d'ancrage (14) pour le coussin gonflable (12), qui est pourvue de goujons de fixation (22), la plaque d'ancrage (14) ayant une ouverture (142), qui est orientée en direction de l'orifice de gonflage (121), le générateur de gaz (16) ayant un boîtier, qui s'étend à travers l'ouverture (142) dans la plaque d'ancrage (14) et à travers l'orifice de gonflage (121) dans le coussin gonflable replié (12) les goujons de fixation (22), quand le système de retenue à coussin gonflable est en position montée, venant en prise dans des ouvertures de passage (20) dans la plaque porteuse (18), et la plaque d'ancrage (14) pouvant être solidarisée par serrage à la plaque porteuse (18) par des écrous (42) pouvant être vissés sur les goujons de fixation (22), et le coussin gonflable replié (12) et la plaque d'ancrage (14) formant une seconde unité préassemblée, caractérisé en ce que la première unité est constituée par le fait que le générateur de gaz (12) est fixé, à travers des parties de paroi (282) de la plaque porteuse (18), rabattues radialement vers l'intérieur, dans un renfoncement (28) dans la plaque porteuse (18), dans laquelle il est inséré.

2. Système de retenue à coussin gonflable selon la revendication 1, caractérisé en ce que le cache (10) est pourvu de parties de paroi (30, 31) repliées vers l'intérieur, qui sont serrées entre la plaque d'ancrage (14) et la plaque porteuse (18).

3. Système de retenue à coussin gonflable selon la revendication 2, caractérisé en ce que les parties de paroi (30) repliées sont pourvues d'ouvertures de passage (34) pour les goujons de fixation (22).

4. Système de retenue à coussin gonftable selon l'une des revendications précédentes, caractérisé en ce que la plaque porteuse (18), constituée en général de façon carrée, est munie de pattes de fixation (24) faisant corps avec elle.

5. Système de retenue à coussin gonflable selon l'une des revendications précédentes, caractérisé en ce que le coussin gonflable (12) est maintenu en position pliée par un film (40) qui l'entoure.

6. Système de retenue à coussin gonflable selon la revendication 2 ou la revendication 2 et l'une des revendications 3 à 5, caractérisé en ce que les parties de paroi (30, 31) repliées du cache (10) sont munies d'un ressaut de bordure (301, 311), qui vient en prise dans le renfoncement (28) de la plaque porteuse (18).

7. Système de retenue à coussin gonftable selon la revendication 6, caractérisé en ce que le ressaut de bordure (311) de respectivement l'une des parties de paroi repliées (31) est prolongé dans la zone du pourtour du générateur de gaz (12) et vient en prise ajustée dans un évidement d'une partie de paroi voisine (30) du cache (10).

8. Système de retenue à coussin gonflable selon l'une des revendications précédentes, caractérisé en ce que le cache (10) forme la plaque d'impact d'un volant.

9. Système de retenue à coussin gonflable selon la revendication 3 ou la revendication 3 et l'une des revendications 4 à 8, caractérisé en ce que les ouvertures de passage (34) des parties de paroi (30) présentent respectivement un rétrécissement (38), qui bloque le goujon de fixation (22).
